# FASCICULE DE BREVET EUROPEEN

(11) **EP 3 488 692 B1**
(45) Date de publication et mention de la délivrance du brevet: **11.01.2023**
(21) Numéro de dépôt: 18208269.3
(22) Date de dépôt: 26.11.2018
(51) Int. Cl.: A01M 7/00

(54) **PANNEAU RÉCUPÉRATEUR DE PRODUIT PHYTOSANITAIRE ET MACHINE DE PULVÉRISATION**
RÜCKGEWINNUNGSPLATTE VON PFLANZENSCHUTZMITTELN, UND SPRÜHGERÄT
PHYTOSANITARY PRODUCT RECOVERY PANEL AND SPRAYING MACHINE

(30) Priorité: 27.11.2017 FR 1761235
(43) Date de publication de la demande: 29.05.2019
(73) Titulaire: Exel Industries, 51200 Epernay (FR)
(72) Inventeur: DARRIEUTORT, Anthony, 75009 PARIS (FR); MONCHANIN, Raphael, 75009 PARIS (FR)
(74) Mandataire: Argyma

(56) Documents cités:
- DE-U1- 8 906 405
- FR-A1- 2 598 941
- FR-A1- 2 969 902
- US-B1- 6 302 332

## Description

L'invention concerne un panneau de récupération de produit phytosanitaire, ainsi qu'une machine de pulvérisation de produit phytosanitaire sur une culture viticole ou arboricole.

Dans les cultures viticoles, il est connu de pulvériser des produits phytosanitaires sur les vignes par l'intermédiaire de « descentes », c'est-à-dire des éléments verticaux qui portent au moins un dispositif de pulvérisation. Certaines technologies utilisent notamment des diffuseurs d'air et des buses de projection de produit phytosanitaire sous formes de gouttes de tailles modifiables emportées par le flux d'air sur les cultures.

L'inconvénient de ces systèmes est qu'une certaine partie du produit n'atteint pas ou ne reste pas sur la vigne, et peut se disperser vers des cours d'eaux, d'autres cultures ou des habitations avec les problèmes environnementaux que cela implique.

Pour résoudre ce problème, des panneaux récupérateurs, qui permettent de récupérer en partie le produit qui ne reste pas sur la vigne, ont été créés. Cependant, le phénomène de rebond de l'air projeté sur le fond du panneau entraîne des dispersions latérales d'air chargé de produit phytosanitaire qui nuisent au taux de récupération de ces panneaux récupérateurs.

Des panneaux récupérateurs sont connus de FR 2 969 902, US 6 302 332 et DE 89 06 405.

C'est à ces inconvénients qu'entend remédier l'invention en proposant un nouveau panneau récupérateur permettant un taux de récupération de produit phytosanitaire accru par rapport aux matériels de l'art antérieur.

A cet effet, l'invention concerne un panneau récupérateur de produit phytosanitaire, comprenant les caractéristiques de la revendication 1.

Grâce à l'invention, le flux d'air ne provoque pas d'effet de rebond sur le panneau et est guidé, ce qui évite une dispersion du produit phytosanitaire autour du panneau et améliore la récupération.

Selon des aspects avantageux mais non obligatoires de l'invention, un tel panneau récupérateur peut incorporer une ou plusieurs des caractéristiques suivantes, prises selon toute combinaison techniquement admissible :
- Le panneau comprend un élément perméable au passage de l'air, dont l'aire est sensiblement égale à celle de la surface de récupération, s'étendant selon le plan principal et situé en arrière de la surface de récupération de telle manière qu'un flux d'air traversant le panneau passe d'abord à travers les ailettes puis à travers l'élément perméable au passage de l'air.
- L'élément perméable au passage de l'air présente des mailles dont la dimension est comprise entre 0,5 et 2,5 mm², de préférence égale à 1 mm².
- L'élément perméable à l'air est un filet.
- L'élément perméable à l'air est placé à une distance des ailettes comprise entre 0 et 150 mm.
- Les ailettes ont une orientation variable par rapport au plan principal.
- Le panneau présente une direction longitudinale sensiblement verticale, et une direction transversale sensiblement parallèle au sol et alignée avec une direction d'avancement d'une machine transportant le panneau.
- Les ailettes s'étendent selon la direction longitudinale du panneau.
- Le panneau comprend un élément filtrant perméable au passage de l'air, s'étendant en avant de la surface de récupération, cet élément filtrant ayant des mailles dont la dimension est supérieure à la dimension des mailles de l'élément situé en arrière de la surface de récupération.
- Le panneau comprend deux surfaces de récupération situées sur deux faces opposées du panneau de part et d'autre du plan principal.

L'invention concerne également une machine de pulvérisation de produit phytosanitaire dans une culture viticole, comprenant au moins un dispositif de pulvérisation comprenant au moins une buse de projection de produit phytosanitaire adaptée pour projeter le produit phytosanitaire sur un premier côté d'une vigne, et au moins un panneau récupérateur situé sur un côté opposé de cette vigne en regard de la buse de projection.

Selon des aspects avantageux mais non obligatoires de l'invention, une telle machine de pulvérisation peut incorporer une ou plusieurs des caractéristiques suivantes, prises selon toute combinaison techniquement admissible :
- Le dispositif de pulvérisation est prévu sur un premier panneau récupérateur et adapté pour projeter du produit phytosanitaire en direction d'un deuxième panneau récupérateur situé en regard par rapport à la vigne, la machine comprenant également un deuxième dispositif de pulvérisation prévu sur le deuxième panneau récupérateur et adapté pour projeter du produit phytosanitaire en direction du premier panneau récupérateur.
- Le dispositif de pulvérisation prévu sur le premier panneau récupérateur est situé à l'avant de ce panneau, par rapport à la direction d'avancement de la machine, et le dispositif de pulvérisation prévu sur le deuxième panneau récupérateur est situé à l'arrière de ce panneau, par rapport à la direction d'avancement de la machine.
- Les ailettes des panneaux récupérateurs ont une orientation variable par rapport au plan principal, et la machine est adaptée pour contrôler de façon asservie cette orientation en fonction au moins d'une orientation des buses de projection et/ou d'une vitesse d'avancement de la machine.

L'invention sera mieux comprise et d'autres avantages de celle-ci apparaitront plus clairement à la lumière de la description qui va suivre d'un panneau récupérateur et d'une machine de pulvérisation conformes à son principe, faite à titre d'exemple non limitatif et en référence aux dessins annexés dans lesquels :
- la figure 1 est une vue en perspective d'un panneau récupérateur conforme à l'invention ;

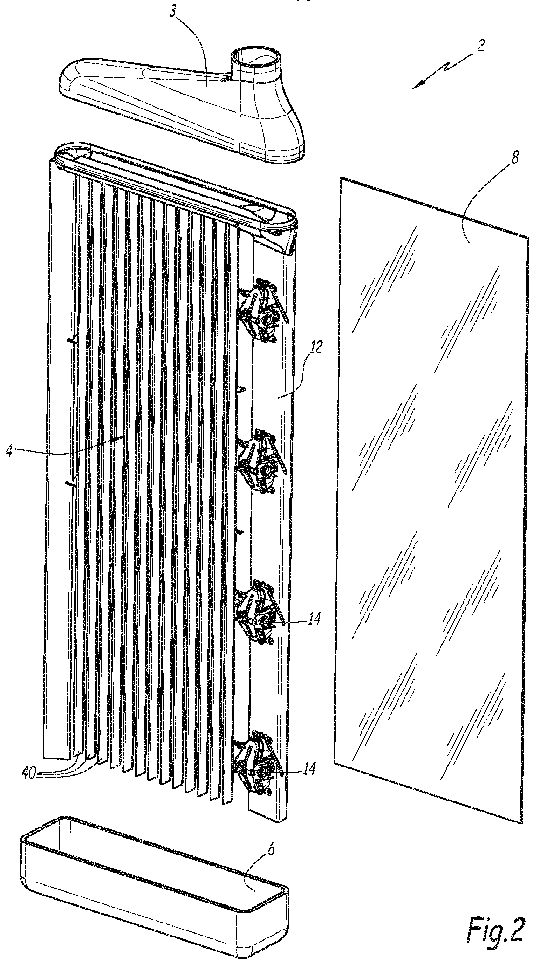

- la figure 2 est une vue en perspective éclatée du panneau récupérateur de la figure 1 ;

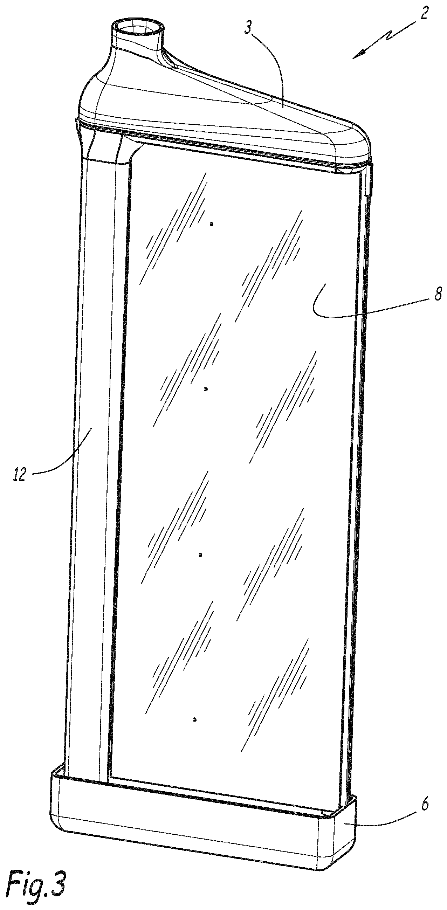

- la figure 3 est une vue en perspective selon une direction opposée, du panneau récupérateur de figure 1 ;
- la figure 4 est vue de face selon la flèche IV du panneau récupérateur de la figure 1 ;
- la figure 5 est un vue en perspective sectionnée selon le plan V-V du panneau récupérateur de la figure 1 ;
- la figure 6 est une coupe selon le plan V-V ;

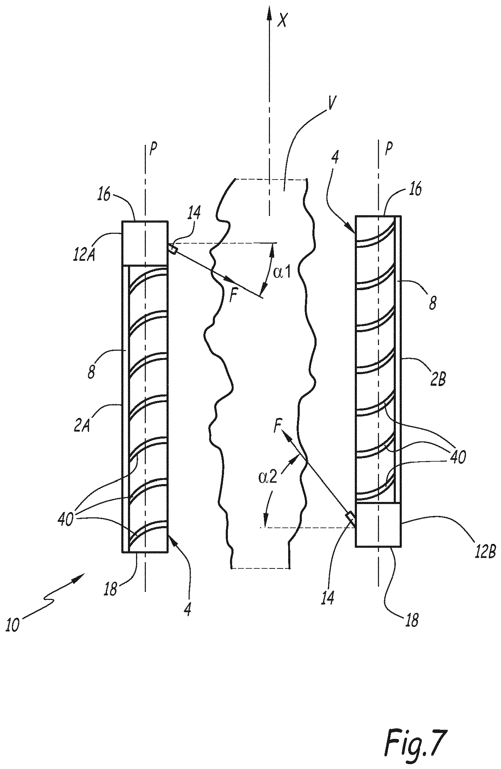

- la figure 7 est une vue de dessus schématique d'une machine de pulvérisation selon l'invention ;
- les figures 8 à 10 sont des vues de dessus similaires à la figure 7, représentant des variantes de la machine de pulvérisation de la figure 7 ;
- la figure 11 est une vue de dessus schématique d'un panneau récupérateur selon un second mode de réalisation.

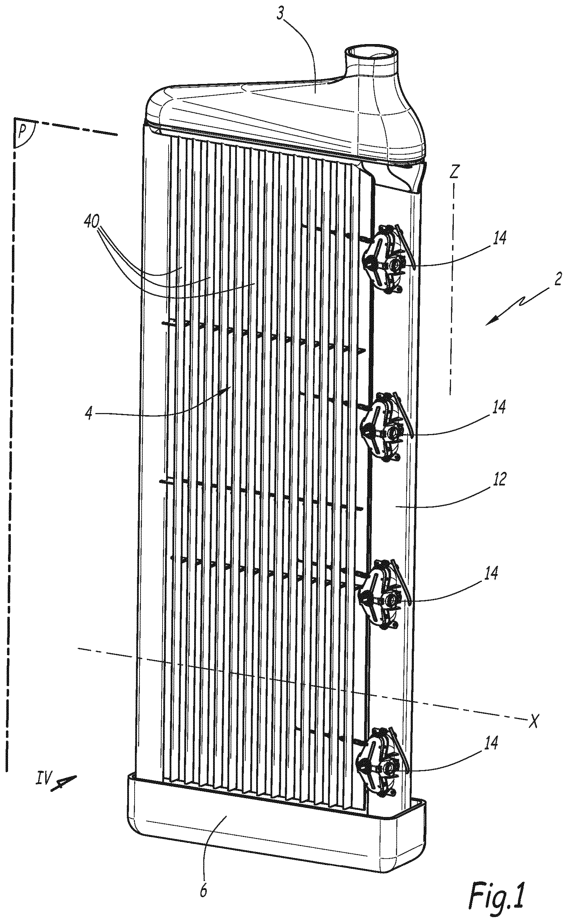

La figure 1 représente un panneau récupérateur 2 de produit phytosanitaire, comprenant une surface de récupération 4 s'étendant selon un plan principal P, et un bac de récupération 6 situé sur un bord de la surface de récupération 4 de manière à recevoir le produit phytosanitaire par écoulement sur la surface de récupération 4. Le plan principal P est représenté vertical. Il peut changer d'orientation en fonction du déplacement d'une machine de pulvérisation 10 sur laquelle est installé le panneau récupérateur 2.

La machine de pulvérisation 10 de produit phytosanitaire dans une culture viticole, comprend au moins un dispositif de pulvérisation 12, également appelé descente, comprenant au moins une buse de projection 14 de produit phytosanitaire adaptée pour projeter le produit phytosanitaire sur un premier côté d'une vigne V, et au moins un panneau récupérateur 2 situé sur un côté opposé de cette vigne V en regard de la buse de projection 14. La machine 10 se déplace entre des rangs de vignes V selon une direction d'avance X.

La machine 10 peut également être adaptée au traitement de cultures arboricoles.

Les buses 14 sont combinées à des diffuseurs d'air qui soufflent un flux d'air F, qui porte le produit phytosanitaire dispersé sous forme de gouttelettes vers les vignes. Un conduit d'arrivée d'air 3 est prévu sur une partie supérieure du panneau 2.

Les dispositifs 12 sont combinés avec les panneaux récupérateurs 2. En pratique, un premier dispositif de pulvérisation 12A est prévu sur un premier panneau récupérateur 2A et adapté pour projeter du produit phytosanitaire en direction d'un deuxième panneau récupérateur 2B situé en regard par rapport à la vigne V. Un deuxième dispositif de pulvérisation 12B prévu sur le deuxième panneau récupérateur 2B et adapté pour projeter du produit phytosanitaire en direction du premier panneau récupérateur 2A.

Le dispositif de pulvérisation 12A est situé du côté avant 16 du panneau 2A, par rapport à la direction d'avance X de la machine 10, et le dispositif de pulvérisation 12B est situé du côté arrière 18 du panneau 2B, par rapport à la direction d'avance X.

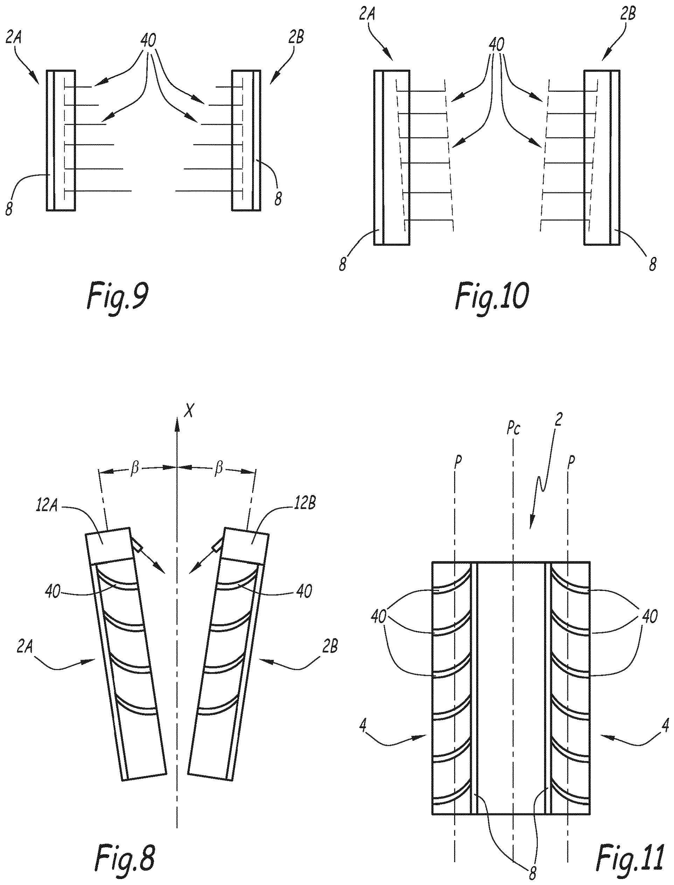

En variante les dispositifs de pulvérisation 12A et 12B sont tous disposés du coté avant, ou du coté arrière. Ainsi comme on peut le voir sur la figure 8 les dispositifs de pulvérisation 12A et 12B sont disposés vers l'avant des panneaux 2A et 2B.

Les directions de soufflage des buses 14 peuvent être modifiées et sont orientées par rapport au plan principal P. Pour tenir compte de l'effet de l'avancement de la machine 10 sur la trajectoire du flux d'air F, la direction de soufflage du dispositif de pulvérisation 12A, situé à l'avant, est différente de la direction de soufflage du dispositif de pulvérisation 12B, situé à l'arrière. La direction du flux d'air F du dispositif de pulvérisation 12A forme un angle α1 par rapport à une direction perpendiculaire à la direction d'avance X. L'angle α1 est compris entre -15° et 15°, de préférence entre 0 et 10°, encore plus préférentiellement égal à 5°. La direction du flux d'air F du dispositif de pulvérisation 12B forme un angle α2 par rapport à une direction perpendiculaire à la direction d'avance X. L'angle α2 est compris entre 0° et 45°, de préférence entre 0 et 25°, encore plus préférentiellement égal à 15°. Les valeurs positives des exemples d'angles donnés correspondent à des directions de flux d'air F dirigées vers l'arrière par rapport à la direction d'avance X de la machine 10.

De façon connue, les panneaux 2 et les dispositifs de pulvérisation 12 associés sont portés par une structure porteuse non représentée et la machine 10 peut être automotrice, montée sur un véhicule, ou bien tractée.

La surface de récupération 4 est formée par une pluralité d'ailettes 40 espacées entre elle de manière que le flux d'air F puisse traverser la surface de récupération 4 en passant entre les ailettes 40. Ainsi, au lieu de rebondir sur un panneau plein, l'air portant les gouttelettes de produit phytosanitaire passe à travers une surface ajourée, dans laquelle l'air est guidé, et le flux d'air brisé pour réduire son énergie et sa dispersion.

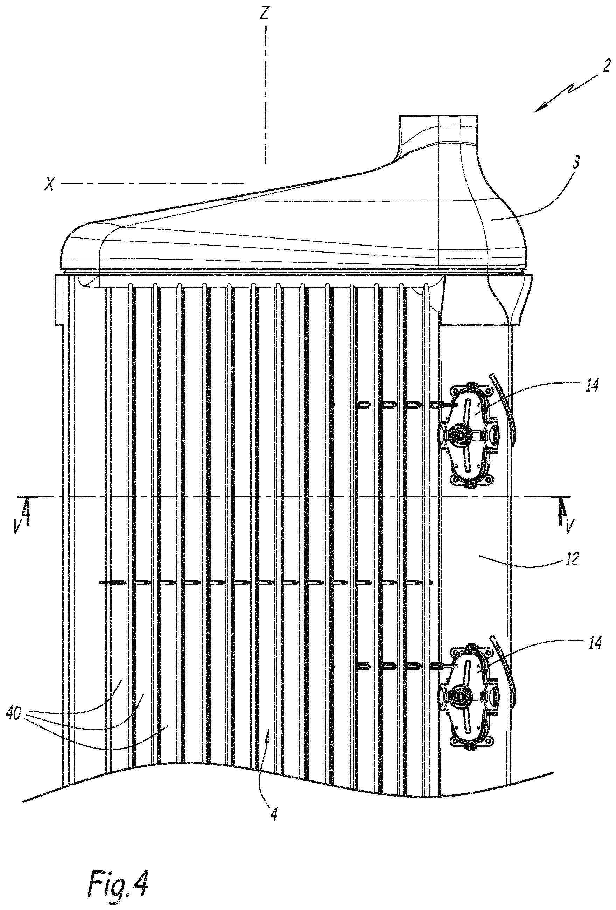

Les ailettes 40 sont inclinées par rapport au plan principal P selon un angie θ de manière à former un obstacle continu selon une direction perpendiculaire au plan principal P. Comme cela est visible sur la figure 4, il n'y a aucun espace entre les ailettes 40, de manière que le maximum de produit phytosanitaire soit récupéré, tout en laissant passer l'air. De manière générale, la surface projetée des ailettes 40 selon une direction parallèle à la direction du flux d'air F est continue.

Les ailettes 40 peuvent être orientables par rapport au plan P. Par exemple, les ailettes 40 peuvent être mobiles en rotation autour d'un axe longitudinal Z40 parallèle à la direction Z et au plan P, de telle manière que l'angle θ peut être modifié. L'orientation des ailettes 40 se fait manuellement ou automatiquement, individuellement ou par série.

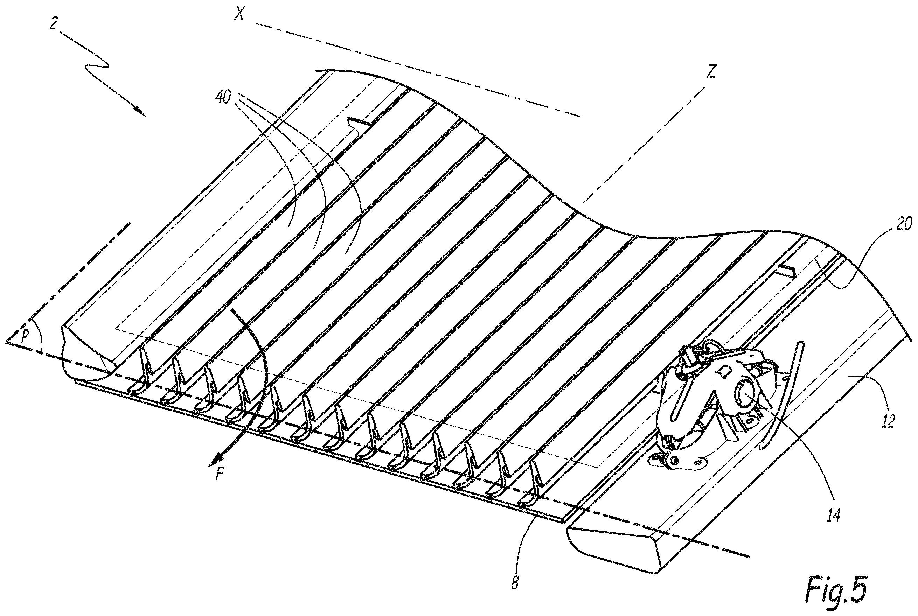

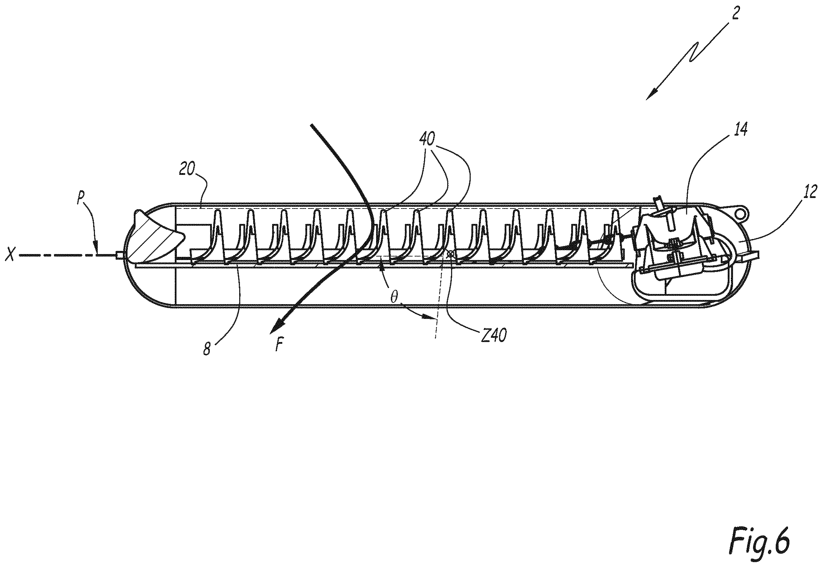

Les ailettes 40 peuvent présenter un profil non rectiligne, comme cela est visible sur les figures 5 et 6. Dans l'exemple représenté, les ailettes 40 ont une forme courbe. En variante, les ailettes 40 peuvent présenter des angles. La forme non rectiligne permet de guider le flux d'air selon une direction souhaitée. Les ailettes peuvent être pleines ou ajourées.

L'orientation des ailettes 40 peut être différente sur la largeur des panneaux 2. Par exemple, les ailettes 40 situées du côté de l'avant de la machine peuvent avoir un angle par rapport à la direction d'avance X différent par rapport aux ailettes situées du côté arrière de la machine.

Les panneaux 2 peuvent être inclinés par rapport aux vignes V. Notamment les panneaux peuvent présenter un angle ouvert en direction de l'avancée de la machine. Les panneaux présentent alors une forme d'entonnoir ou de « V », comme on peut le voir sur la figure 8. Dans ce cas les panneaux 2A et 2B peuvent former un angle β par rapport à la direction d'avance X.

Le panneau 2 comprend un élément 8 perméable au passage de l'air, ou filet, dont l'aire est sensiblement égale à celle de la surface de récupération 4, et s'étendant selon le plan principal P. Le filet 8 est situé en arrière de la surface de récupération 4 de telle manière que le flux d'air F traversant le panneau 2 passe d'abord à travers les ailettes 40 puis à travers le filet 8. Dans la suite, le filet 8 est appelé « filet arrière ».

Le filet arrière 8 peut avoir des mailles de largeur comprise entre 0,5 et 2,5 mm², de préférence 1 mm².

Selon une autre unité de mesure le filet peut se caractériser en Mesh et comprendre des valeurs entre 7 et 35.

Par filet on entend un élément perméable à l'air, ajouré. Le filet peut être notamment sous forme d'un maillage en inox, en plastique, en plastique injecté d'un seul tenant.

Dans l'exemple représenté, le filet arrière 8 est placé contre les ailettes 40 en variante non représentée, le filet arrière 8 peut être éloigné des ailettes 40 d'une distance pouvant aller jusqu'à 150 mm, de préférence comprise entre 10 et 20 mm.

De façon optionnelle représentée aux figures 5 et 6, un second élément 20 perméable au passage de l'air peut également prévu en avant de la surface de récupération 4. Cet élément 20, qu'on appellera « filet avant » peut se présenter sous la forme d'un filet ayant des mailles de largeur supérieure à la largeur des mailles du filet arrière 8.

Le filet avant 20 présente de préférence des mailles d'une dimension de l'ordre de 2,5 à 5 mm².

L'objectif du filet avant 20 est de faire un filtrage, en capturant des éléments végétaux avant leur entrée dans les ailettes 40, tandis que le filet arrière 8 vise à laisser passer l'air tout en rompant le flux d'air F, et à récupérer les gouttelettes résiduelles portées par le flux d'air F.

Le panneau 2 présente une direction longitudinale Z sensiblement verticale, et une direction transversale sensiblement parallèle au sol et alignée avec la direction d'avance X de la machine 10.

Dans l'exemple représenté, les ailettes 40 s'étendent selon la direction longitudinale Z du panneau 2. On définit dans ce cas la largeur des ailettes 40 comme étant leur dimension selon une direction perpendiculaire à la direction longitudinale Z. En variante, les ailettes 40 peuvent être orientées différemment par rapport à la direction longitudinale Z.

Selon un mode de réalisation représenté figure 9, la largeur des ailettes 40 peut être variable entre le côté avant et le côté arrière des panneaux 2A et 2B. Les ailettes disposées sur l'avant du panneau 2A ou 2B étant moins larges que les ailettes disposées sur la partie arrière du panneau 2A ou 2B. En variante représentée sur la figure 10 les ailettes 40 disposées sur l'arrière peuvent présenter une largeur équivalente mais un positionnement sur le panneau qui décale les ailettes en direction du panneau opposé (ou vers le dispositif 12 correspondant).

Selon un mode de réalisation représenté à la figure 11, le panneau récupérateur 2 peut comprendre deux plans d'ailettes de part et d'autre d'un plan central Pc, formant deux surfaces de récupération 4 permettant de récupérer du produit sur deux faces opposées. Les deux plans d'ailettes peuvent être séparés par des filets, ou par une cloison, ou par une combinaison de filets et de cloisons.

L'orientation θ des ailettes 40 peut être contrôlée par un asservissement en fonction de l'orientation des buses des dispositifs 12 et/ou de la vitesse d'avancement de la machine 10. L'asservissement peut également être fonction de la vitesse du vent environnant. Cet asservissement peut être réalisé à l'air de capteurs d'orientation des ailettes 40 et d'une unité électronique de contrôle. La vitesse d'avancement de la machine peut être comprise entre 5 et 10 km/h.

Globalement, le panneau 2 forme un ensemble perméable à l'air, c'est-à-dire que l'air peut le traverser d'une face à l'autre, et qu'il n'y a pas de phénomène de rebond sur des surfaces planes opposées à la direction de l'air.

Le flux d'air soufflé F peut présenter une largeur de l'ordre de 30 cm à son arrivée sur le panneau 2.

Les caractéristiques des modes de réalisation et variantes décrits ci-dessus peuvent être combinées pour former de nouveaux modes de réalisation de l'invention.

## Revendications

1. Panneau récupérateur (2) de produit phytosanitaire, comprenant une surface de récupération (4) s'étendant selon un plan principal (P), et un bac de récupération (6) situé sur un bord de la surface de récupération (4) de manière à recevoir le produit phytosanitaire par écoulement sur la surface de récupération (4), **caractérisé en ce que** la surface de récupération (4) est formée par une pluralité d'ailettes (40) espacées entre elle de manière qu'un flux d'air (F) puisse traverser la surface de récupération (4) en passant entre les ailettes (40) et **en ce que** les ailettes (40) sont inclinées par rapport au plan principal (P) de manière à former un obstacle continu selon une direction perpendiculaire au plan principal (P).

2. Panneau récupérateur selon la revendication 1, **caractérisé en ce qu'**il comprend un élément perméable (8) au passage de l'air, dont l'aire est sensiblement égale à celle de la surface de récupération (4), s'étendant selon le plan principal (P) et situé en arrière de la surface de récupération (4) de telle manière qu'un flux d'air (F) traversant le panneau (2) passe d'abord à travers les ailettes (40) puis à travers l'élément perméable (8) au passage de l'air.

3. Panneau récupérateur selon la revendication 2, **caractérisé en ce que** l'élément perméable (8) au passage de l'air présente des mailles dont la dimension est comprise entre 0,5 et 2,5 mm², de préférence égale à 1 mm².

4. Panneau récupérateur selon l'une des revendications 2 et 3, **caractérisé en ce que** l'élément perméable (8) à l'air est un filet.

5. Panneau récupérateur selon l'une des revendications 2 à 4, **caractérisé en ce que** l'élément perméable à l'air (8) est placé à une distance des ailettes (40) comprise entre 0 et 150 mm.

6. Panneau récupérateur selon l'une des revendications 2 à 5, **caractérisé en ce qu'**il comprend un élément filtrant (20) perméable au passage de l'air, s'étendant en avant de la surface de récupération (4), cet élément filtrant (20) ayant des mailles dont la dimension est supérieure à la dimension des mailles de l'élément (8) situé en arrière de la surface de récupération (4).

7. Panneau récupérateur selon l'une des revendications précédentes, **caractérisé en ce que** les ailettes (40) ont une orientation (θ) variable par rapport au plan principal (P).

8. Panneau récupérateur selon l'une des revendications précédentes, **caractérisé en ce qu'**il comprend deux surfaces de récupération (4), formées par une pluralité d'ailettes (40) espacées entre elle de manière qu'un flux d'air (F) puisse traverser ces deux surfaces de récupération (4) en passant entre les ailettes (40), situées sur deux faces opposées du panneau (2) de part et d'autre d'un plan central (Pc).

9. Machine (10) de pulvérisation de produit phytosanitaire dans une culture viticole, comprenant au moins un dispositif de pulvérisation (12) comprenant au moins une buse de projection (14) de produit phytosanitaire adaptée pour projeter le produit phytosanitaire sur un premier côté d'une vigne (V), et au moins un panneau récupérateur (2) selon l'une des revendications précédentes situé sur un côté opposé de cette vigne (V) en regard de la buse de projection (14).

10. Machine de pulvérisation selon la revendication 9, **caractérisée en ce que** le dispositif de pulvérisation (12A) est prévu sur un premier panneau récupérateur (2A) et adapté pour projeter du produit phytosanitaire en direction d'un deuxième panneau récupérateur (2B) situé en regard par rapport à la vigne (V), la machine (10) comprenant également un deuxième dispositif de pulvérisation (12B) prévu sur le deuxième panneau récupérateur (2B) et adapté pour projeter du produit phytosanitaire en direction du premier panneau récupérateur (2A).

11. Machine de pulvérisation selon la revendication 10, **caractérisée en ce que** le dispositif de pulvérisation (12A) prévu sur le premier panneau récupérateur (2A) est situé à l'avant (16) de ce panneau (2A), par rapport à la direction d'avance (X) de la machine (10), et le dispositif de pulvérisation (12B) prévu sur le deuxième panneau récupérateur (2B) est situé à l'arrière (18) de ce panneau (2B), par rapport à la direction d'avance (X) de la machine (10).

12. Machine de pulvérisation selon la revendication 9, **caractérisée en ce que** les ailettes (40) des panneaux récupérateurs (2) ont une orientation (θ) variable par rapport au plan principal (P), et **en ce que** la machine (10) est adaptée pour contrôler de façon asservie cette orientation (θ) en fonction au moins d'une orientation (α1, α2) des buses de projection (14) et/ou d'une vitesse d'avancement de la machine (10).

13. Machine de pulvérisation selon l'une des revendications 9 à 12, **caractérisée en ce que** les panneaux (2) présentent une direction longitudinale (Z) sensiblement verticale, et une direction transversale sensiblement parallèle au sol et alignée avec une direction d'avance (X) de la machine (10) de pulvérisation.

14. Machine de pulvérisation selon la revendication 13, **caractérisée en ce que** les ailettes (40) s'étendent selon la direction longitudinale (Z) des panneaux (2).

## Patentansprüche

1. Rückgewinnungsplatte (2) eines Pflanzenschutzmittels, umfassend eine Rückgewinnungsfläche (4), die sich gemäß einer Hauptebene (P) erstreckt, und einen Rückgewinnungsbehälter (6), der sich auf einem Rand der Rückgewinnungsfläche (4) derart befindet, dass das Pflanzenschutzmittel durch Fließen über die Rückgewinnungsfläche (4) aufgenommen wird, **dadurch gekennzeichnet, dass** die Rückgewinnungsfläche (4) von einer Vielzahl von Flügeln (40) gebildet ist, die voneinander derart beabstandet sind, dass ein Luftstrom (F) die Rückgewinnungsfläche (4) durchqueren kann, indem er zwischen den Flügeln (40) hindurchgeht, und dass die Flügel (40) im Verhältnis zur Hauptebene (P) derart geneigt sind, dass ein kontinuierliches Hindernis gemäß einer zur Hauptebene (P) senkrechten Richtung gebildet wird.

2. Rückgewinnungsplatte nach Anspruch 1, **dadurch gekennzeichnet, dass** sie ein für den Durchgang der Luft durchlässiges Element (8) umfasst, dessen Bereich etwa gleich dem der Rückgewinnungsfläche (4) ist, das sich gemäß der Hauptebene (P) erstreckt und sich hinter der Rückgewinnungsfläche (4) befindet, so dass ein Luftstrom (F), der die Platte (2) durchquert, zunächst durch die Flügel (40) und dann durch das für den Durchgang der Luft durchlässige Element (8) verläuft.

3. Rückgewinnungsplatte nach Anspruch 2, **dadurch gekennzeichnet, dass** das für den Durchgang der Luft durchlässige Element (8) Maschen aufweist, deren Größe zwischen 0,5 und 2,5 mm² liegt und vorzugsweise gleich 1 mm² beträgt.

4. Rückgewinnungsplatte nach einem der Ansprüche 2 und 3, **dadurch gekennzeichnet, dass** das für Luft durchlässige Element (8) ein Netz ist.

5. Rückgewinnungsplatte nach einem der Ansprüche 2 bis 4, **dadurch gekennzeichnet, dass** das für Luft durchlässige Element (8) in einem Abstand von den Flügeln (40) platziert ist, der zwischen 0 und 150 mm liegt.

6. Rückgewinnungsplatte nach einem der Ansprüche 2 bis 5, **dadurch gekennzeichnet, dass** sie ein für den Durchgang der Luft durchlässiges Filterelement (20) umfasst, das sich vor der Rückgewinnungsfläche (4) erstreckt, wobei dieses Filterelement (20) Maschen hat, deren Abmessung größer als die Abmessung der Maschen des Elements (8) ist, das sich hinter der Rückgewinnungsfläche (4) befindet.

7. Rückgewinnungsplatte nach einem der vorangehenden Ansprüche, **dadurch gekennzeichnet, dass** die Flügel (40) eine im Verhältnis zur Hauptebene (P) variable Ausrichtung (θ) haben.

8. Rückgewinnungsplatte nach einem der vorangehenden Ansprüche, **dadurch gekennzeichnet, dass** sie zwei Rückgewinnungsflächen (4) umfasst, die von einer Vielzahl von Flügeln (40) gebildet sind, die derart voneinander beabstandet sind, dass ein Luftstrom (F) diese zwei Rückgewinnungsflächen (4) durchqueren kann, indem er zwischen den Flügeln (40) hindurchgeht, die sich auf zwei gegenüberliegenden Seiten der Platte (2) beiderseits einer zentralen Ebene (Pc) befinden.

9. Maschine zum Sprühen (10) eines Pflanzenschutzmittels in einer Rebkultur, umfassend mindestens eine Sprühvorrichtung (12), die mindestens eine Sprühdüse (14) eines Pflanzenschutzmittels umfasst, die geeignet ist, das Pflanzenschutzmittel auf eine erste Seite eines Rebstocks (V) zu sprühen und mindestens Rückgewinnungsplatte (2) nach einem der vorangehenden Ansprüche, die sich auf einer diesem Rebstock (V) gegenüberliegenden Seite der Sprühdüse (14) zugewandt befindet.

10. Sprühmaschine nach Anspruch 9, **dadurch gekennzeichnet, dass** die Sprühvorrichtung (12A) auf einer ersten Rückgewinnungsplatte (2A) vorgesehen ist und geeignet, Pflanzenschutzmittel in Richtung einer zweiten Rückgewinnungsplatte (2B) zu sprühen, die sich im Verhältnis zum Rebstock (V) zugewandt befindet, wobei die Maschine (10) ebenfalls eine zweite Sprühvorrichtung (12B) umfasst, die auf der zweiten Rückgewinnungsplatte (2B) vorgesehen ist und geeignet, Pflanzenschutzmittel in Richtung der ersten Rückgewinnungsplatte (2A) zu sprühen.

11. Sprühmaschine nach Anspruch 10, **dadurch gekennzeichnet, dass** sich die Sprühvorrichtung (12A), die auf der ersten Rückgewinnungsplatte (2A) vorgesehen ist, im Verhältnis zur Fahrtrichtung (X) der Maschine (10) vor (16) dieser Platte (2A) befindet und sich die Sprühvorrichtung (12B), die auf der zweiten Rückgewinnungsplatte (2B) vorgesehen ist, im Verhältnis zur Fahrtrichtung (X) der Maschine (10) hinter (18) dieser Platte (2B) befindet.

12. Sprühmaschine nach Anspruch 9, **dadurch gekennzeichnet, dass** die Flügel (40) der Rückgewinnungsplatten (2) eine im Verhältnis zur Hauptebene (P) variable Ausrichtung (θ) haben und dass die Maschine (10) geeignet ist, diese Ausrichtung (θ) in Abhängigkeit von mindestens einer Ausrichtung (α1, α2) der Sprühdüsen (14) und/oder einer Fahrgeschwindigkeit der Maschine (10) geregelt zu steuern.

13. Sprühmaschine nach einem der Ansprüche 9 bis 12, **dadurch gekennzeichnet, dass** die Platten (2) eine etwa vertikale Längsrichtung (Z) und eine transversale Richtung aufweisen, die etwa parallel zum Boden ist und mit einer Fahrtrichtung (X) der Sprühmaschine (10) übereinstimmt.

14. Sprühmaschine nach Anspruch 13, **dadurch gekennzeichnet, dass** sich die Flügel (40) gemäß der Längsrichtung (Z) der Platten (2) erstrecken.

## Claims

1. A phytosanitary product recovering panel (2), comprising a recovery surface (4) extending along a main plane (P), and a recovery bin (6) located on one edge of the recovery surface (4) so a to receive the phytosanitary product by flowing on the recovery surface (4), **characterised in that** the recovery surface (4) is formed by a plurality of fins (40) spaced apart from each other so that an air stream (F) can cross the recovery surface (4) by passing between the fins (40) and **in that** the fins (40) are tilted relative to the main plane (P) so as to form a continuous obstacle along a direction perpendicular to the main plane (P).

2. The recovering panel according to claim 1, **characterised in that** it comprises an air flow permeable element (8), the area of which is substantially equal to that of the recovery surface (4), extending along the main plane (P) and located rearwardly of the recovery surface (4) so that an air stream (F) crossing the panel (2) first passes through the fins (40) and then through the air flow permeable element (8).

3. The recovering panel according to claim 2, **characterised in that** the air flow permeable (8) has meshes the dimension of which is between 0.5 and 2.5mm², preferably equal to 1mm².

4. The recovering panel according to one of claims 2 and 3, **characterised in that** the air permeable element (8) is a net.

5. The recovering panel according to one of claims 2 to 4, **characterised in that** the air permeable element (8) is placed at a distance from the fins (40) of between 0 and 150mm.

6. The recovering panel according to one of claims 2 to 5, **characterised in that** it comprises an air flow permeable filtering element (20), extending forwardly of the recovery surface (4), this filtering element (20) having meshes the dimension of which is greater than the dimension of the meshes of the element (8) located rearwardly of the recovery surface (4).

7. The recovering panel according to one of the preceding claims, **characterised in that** the fins (40) have a variable orientation (θ) relative to the main plane (P).

8. The recovering panel according to one of the preceding claims, **characterised in that** it comprises two recovery surfaces (40), formed by a plurality of fins spaced apart from each other so that an air stream (F) can cross these two recovery surfaces (4) by passing between the fins (40), located on two opposite faces of the panel (2) on either side of a central plane (Pc).

9. A machine (10) for spraying phytosanitary product in a wine crop, comprising at least one spraying device (12) comprising at least one phytosanitary product blasting nozzle (14) adapted to blast the phytosanitary product on a first side of a vineyard (V), and at least one recovering panel (2) according to one of the preceding claims located on a side opposite to this vineyard (V) facing the blasting nozzle (14).

10. The spraying machine according to claim 9, **characterised in that** the spraying device (12A) is provided on a first recovering panel (2A) and adapted to blast a phytosanitary product towards a second recovering panel (2B) located facing the vineyard (V), the machine (10) also comprising a second spraying device (12B) provided on the second recovering panel (2B) and adapted to blast a phytosanitary product towards the first recovering panel (2A).

11. The spraying machine according to claim 10, **characterised in that** the spraying device (12A) provided on the first recovering panel (2A) is located forwardly (16) of this panel (2A), relative to the direction of advance (X) of the machine (10), and the spraying device (12B) provided on the second recovering panel (2B) is located rearwardly (18) of this panel (2B), relative to the direction of advance (X) of the machine (10).

12. The spraying machine according to claim 9, **characterised in that** the fins (40) of the recovering panels (2) have a variable orientation (θ) relative to the main plane (P), and **in that** the machine (10) is adapted to feedback-control this orientation (θ) as a function of at least one orientation (α1, α2) of the blasting nuzzles (14) and/or a speed of advance of the machine (10).

13. The spraying machine according to one of claims 9 to 12, **characterised in that** the panels (2) have a substantially vertical longitudinal direction (Z), and a transverse direction substantially parallel to the ground and aligned with a direction of advance (X) of the spraying machine (10).

14. The spraying machine according to claim 13, **characterised in that** the fins (40) extend along the longitudinal direction (Z) of the panels (2).
